# EUROPÄISCHE PATENTSCHRIFT

(11) **EP 0 857 156 B1**
(45) Veröffentlichungstag und Bekanntmachung des Hinweises auf die Patenterteilung: **12.05.1999**
(21) Anmeldenummer: 96934738.4
(22) Anmeldetag: 18.10.1996
(51) Int. Cl.: B66B 23/22

(54) **BELEUCHTUNGSEINRICHTUNG FÜR PERSONENFÖRDERANLAGEN**
LIGHTING DEVICE FOR SYSTEMS USED FOR CONVEYING PEOPLE
DISPOSITIF D'ECLAIRAGE POUR INSTALLATIONS DE TRANSPORT DE PERSONNES

(30) Priorität: 23.10.1995 DE 19539307; 15.12.1995 DE 19546937
(43) Veröffentlichungstag der Anmeldung: 12.08.1998
(73) Patentinhaber: O & K Rolltreppen GmbH & Co KG, 45525 Hattingen/Ruhr (DE)
(72) Erfinder: HÖFLING, Peter, D-44141 Dortmund (DE); KNOOP, Eckhard, D-44866 Bochum (DE); SCHÖNEWEISS, Klaus, D-45525 Hattingen (DE)
(74) Vertreter: Zipse + Habersack
(86) Internationale Anmeldenummer: EP9604527
(87) Internationale Veröffentlichungsnummer: WO9715520

(56) Entgegenhaltungen:
- US-A- 5 339 228

## Beschreibung

Die Erfindung betrifft eine Beleuchtungseinrichtung für Personenförderanlagen, wie Rolltreppen und Rollsteige.

Durch die DE-A 38 43 090 ist eine Fahrtreppe oder ein Fahrsteig mit mindestens einer Balustrade und einer sich mindestens teilweise längs der Balustrade erstreckenden Beleuchtungsvorrichtung sowie einer Stützvorrichtung für einen auf der Balustrade laufenden Handlauf bekannt. Die Stützvorrichtung besteht aus mindestens einem durchscheinenden Profil, insbesondere aus Kunststoff, das einen Hohlraum für die Aufnahme der Beleuchtungsvorrichtung aufweist. Die Stützvorrichtung beinhaltet eine Aufnahmeausnehmung für elektrische Leitungen oder dgl., die im Bereich der Fahrtreppe oder des Fahrsteiges, der die Beleuchtungsvorrichtung aufweist, verdeckt angeordnet ist. Die Beleuchtungsvorrichtung erstreckt sich in Form mehrerer Leuchtstofflampen zwischen dem unteren und dem oberen Balustradenkopf. Nachteilig ist hier festzustellen, daß infolge des Einsatzes herkömmlicher Leuchtstofflampen als Beleuchtungseinrichtung zwangsweise auch die Stromzufuhr gesichert werden muß. Elektrischer Strom im Bereich von Personenförderanlage stellt stets ein Sicherheitsrisiko, insbesondere im Hinblick auf Wandalismus oder dgl. dar. Die Auswahl von Leuchtstofflampen als Beleuchtungseinrichtung ist darüber hinaus nachteilig, da diese infolge Verschleiß oder Beschädigung durch von außen auf die Abdeckung ausgeübten Schlägen leicht ausfallen können und es eines nicht unerheblichen Zeitaufwandes bedarf, die defekten Bauteile zu ersetzen.

Zur Überwindung dieses Problems wurde in der DE-C 42 09 505 eine Rolltreppe mit einer transparenten Balustrade einem an der Oberkante der Balustrade geführten biegsamen Handlauf sowie einer in einem Hohlraum unterhalb des Handlaufes feststehend angeordneten Beleuchtungsvorrichtung vorgeschlagen, die aus lichtleitenden Fasern gebildet ist, die aus einem die an mindestens einer Stelle in den Lichtleiter eintretenden Lichtstrahlen im wesentlichen parallel zum Handlauf führenden Material besteht, wobei die Lichtaustrittsfläche durch die nach unten weisende Fläche des Lichtleiters gebildet wird, der Querschnitt des Lichtleiters rechteckig ausgebildet ist und über die Länge des Lichtleiters nach Art eines Keiles abnimmt, und daß die jeweils verbleibende Querschnittsfläche des Hohlraumes von einer Gegenlage ausgefüllt ist. Auch wenn hier bereits über eine aktive Lichtquelle Licht in den Querschnitt des Lichtleiters eingeführt und zielgerichtet abgestrahlt werden kann, so stellt sich hier jedoch der Nachteil ein, daß infolge der zwangsläufig zu orientierenden Fasern sowie der keilförmig abnehmenden Kontur ein nicht unerheblicher Herstellungsaufwand betrieben werden muß, der den Lichtleiter erheblich verteuert. Darüber hinaus wird infolge der gewählten Querschnittsform auch das den Lichtleiter aufnehmende Profil unverhältnismäßig kompliziert.

Der EP-A 676 362 ist eine Beleuchtungseinrichtung mit Lichtleitern für Fahrtreppen oder Fahrsteige zu entnehmen, bei welcher mit mindestens teilweise entlang der Balustrade sich erstreckenden Lichtleitern Licht von mindestens einer zentralen Lichtquelle an Beleuchtungspunkte an der Fahrtreppe oder dem Fahrsteig geführt wird. Die Beleuchtungspunkte sind passive Lichtquellen mit je einer Montagevorrichtung, einer Lichtleiterfassung und vorzugsweise einer integrierten Optik, die raumdiskret über die Anlage verteilt sind und über je einen als Glasfaser ausgebildeten diskreten Lichtleiter mit dem Lichtleiteranschluß einer zentralen aktiven Lichtquelle mit Leuchte in einem Gehäuse verbunden sind. Auch wenn hier bereits eine Beleuchtung des Stufen- oder Palettenbandes realisiert werden kann, indem in die Sockelleiste eine Vielzahl sogenannter Spots als passive Lichtquellen eingebracht werden, so ist der damit zusammenhängende Aufwand als unverhältnismäßig anzusehen, da zu jedem Spot ein einzelnes Glasfaserkabel verlegt werden muß. In die Sockelleiste müssen in gleicher Weise eine Vielzahl von Ausnehmungen eingebracht werden, die zur Aufnahme der dort auch noch zu befestigenden Spots dienen.

Ziel des Erfindungsgegenstandes ist es, eine Beleuchtungseinrichtung der genannten Art dergestalt weiterzubilden, daß bei einfachem Herstellungs- und Montageaufwand eine bei Bedarf auch nachrüstbare Lichtleiterführung gegeben ist, wobei durch den Lichtleiter eine Beleuchtung an verschiedenen Bereichen der Rolltreppe bzw. des Rollsteiges herbeigeführt werden kann.

Dieses Ziel wird durch eine Beleuchtungseinrichtung für Personenförderanlagen, wie Rolltreppen und Rollsteige, erreicht, die insbesondere im Bereich des Handlaufes und/oder des Sokkels der Personenförderanlage vorgesehen ist, bestehend aus mindestens einem im wesentlichen in Transportrichtung der Personenförderanlage verlaufenden, zumindest im Einbauzustand durchgehenden Lichtleiter mit seitlichem Lichtaustritt, der im Bereich mindestens eines seiner Enden von dem gebündelten Lichtstrahl mindestens einer Lichtquelle beaufschlagbar ist.

Vorteilhafte Weiterbildungen des Erfindungsgegenstandes sind den Unteransprüchen zu entnehmen.

Durch Einsatz eines homogenen, aus durchscheinendem Material, wie beispielsweise Glasfaser- oder Kunststoffmaterial, bestehenden glatten und biegsamen biegsamen Lichtleiters, der vorzugsweise von einer Schutzhülle aus durchscheindendem Material umgeben und/oder in einem Hohlraum eines ebenfalls aus durchscheinendem Material bestehenden Profils geführt ist, wird eine Möglichkeit aufgezeigt, ohne Einsatz von elektrischem Strom im Transportbereich der Personenförderanlage eine einfach bauende wartungsfreie Beleuchtungseinrichtung zu konzipieren, die keine Vielzahl einzelner Glasfaserkabel benötigt und preiswert in Herstellung und Montage ist. Da der Lichtleiter biegsam ist, kann er problemlos von einer Seite der Personenförderanlage durch den Hohlraum des Profils geführt werden, wobei er diesen weitestgehend ausfüllen kann, insbesondere dann, wenn gute Gleiteigenschaften zwischen der Umfangsfläche des Hohlraumes und der äußeren Umfangsfläche des Lichtleiters gegeben sind. Der Lichtleiter muß auch nicht zwingend aus einem Stück bestehen. Bei Modulbauweise der Balustraden kann der Lichtleiter beispielsweise in entsprechender Modullänge vorgesehen werden, wobei die Stirnflächen korrespondierender Teilstücke nach der Montage der einzelnen Module dicht aneinanderliegen und sich im Einbauzustand der Rolltreppe bzw. des Rollsteiges somit ein durchgehender Lichtleiter ergibt. Bei dichter Anlage der korrespondierenden Stirnflächen sind die Übertragungsverluste unerheblich.

Als aktive Lichtquelle kann beispielsweise ein Projektor bestehend aus Leuchte und Linse zum Einsatz gelangen, wobei über die Linse eine gezielte Bündelung des von der Leuchte ausgehenden Lichtes auf eine der stirnseitigen Querschnittsflächen des Lichtleiters erzeugt wird. Je nach zu erbringender Lichtleistung im Bereich des Handlaufes und/oder im Bereich des Sokkels der Personenförderanlage können ein oder mehrere Projektoren, insbesondere an geschützten Stellen, wie z.B. im Wartungsraum der Personenförderanlage, vorgesehen sein bzw. werden. Zur Anwendung kann ein beliebige Anzahl von Projektoren kommen, die dann z.B. in Abhängigkeit der Länge der Personenförderanlage Licht in entsprechende Teilstücke von Lichtleitern einspeisen. Ebenfalls denkbar ist, in Teilbereiche des/der Lichtleiter konstante und in andere Teilbereiche getaktete Lichtsignale einzuspeisen.

Da der Lichtleiter über seine gesamte Umfangsfläche Licht abstrahlt, erscheint es zweckmäßig, das Licht dergestalt zu konzentrieren, daß die nicht zur Lichtabstrahlung notwendigen Umfangsbereiche von einer reflektierenden Folie abgedeckt sind. Durch diese Maßnahme läßt sich auch die Leistung des Projektors bzw. der Projektoren begrenzen.

Darüber hinaus wird vorgeschlagen, daß bei Umlenkung des Lichtleiters im Bereich der Handlaufumlenkung dieser in den Bereich des Wartungsraumes geführt wird, wobei der Lichtleiter im Bereich der Handlaufumlenkung zur Vermeidung des Austrittes von Streulicht hier abgedunkelt, d.h. insbesondere in einem Schlauch geführt wird.

Zur Erzielung abwechslungsreicher farbiger Effekte kann im Bereich zwischen der Leuchte und der Linse mindestens eine farbige, in Umfangsrichtung insbesondere motorisch drehbare, Scheibe vorgesehen werden.

Damit von außen nicht jedermann in den Bereich des balustraden- und/oder sockelseitigen Hohlraumes hineinblicken kann, wird desweiteren vorgeschlagen, das bzw. die den Lichtleiter aufnehmenden Profile mit Längsrillen zu versehen, wobei durch diese optische Hervorhebung gleichzeitig der Eindruck einer Flächenvergrößerung des bzw. der Profile erreicht wird.

Das bzw. die Profile können einerseits zur Aufnahme des Handlaufes im zugehörigen Balustradenbereich und anderseits zur Beleuchtung des Stufenbandes unmittelbar im Sockelbereich vorgesehen werden, wobei sie dann mit Bauteilen der Sockelleiste, insbesondere lösbar, verbunden werden.

Desweiteren vorteilhaft ist, daß sich diese Art der Beleuchtungseinrichtung praktisch problemlos als Austauschbeleuchtung für herkömmliche Beleuchtungsanlagen an Personenförderanlagen eignet. Es müssen lediglich die herkömmlichen Leuchtstofflampen sowie deren elektrische Leitungen entfernt werden, wobei dann nur eine wie auch immer geartete einfache Halterung zur Aufnahme des vom elektrischen Strom unabhängigen Lichtleiters vorgesehen werden muß, um den Lichtleiter anstelle der Leuchtstofflampen vorzusehen.

Der Anwendungsbereich des Erfindungsgegenstandes ist sehr vielfältig. Neben der Beleuchtung der Balustrade sowie des Stufen- oder Palettenbandes kann darüber hinaus der/die Lichtleiter auch in andere Bereiche der Personenförderanlage, wie z.B. in den Bereich des Auf- und Abganges oder in die Balustradenköpfe fortgeführt werden, um auch hier Beleuchtungseffekte unterschiedlichster Art hervorzurufen. Denkbar ist auch die Beleuchtung peripherer Bereiche der Personenförderanlagen, wie z.B. der sockelseitige Bereich außerhalb des Stufenbandes.

Der Erfindungsgegenstand ist anhand von Prinzipskizzen in der Zeichnung dargestellt und wird wie folgt beschrieben. Es zeigen:
- Figur 1 -: Prinzipskizze einer Rolltreppe mit angedeuteter Beleuchtung sowohl der Balustrade als auch des Stufenbandes
- Figur 2 -: Querschnitt durch die Handlaufführung der Personenförderanlage gemäß Figur 1
- Figur 3 -: Darstellung des Sockelbereiches der Personenförderanlage gemäß Figur 1
- Figuren 4 bis 7 -: Unterschiedliche Lichteinspeisungsmöglichkeiten in Lichtleiter für Personenförderanlagen
- Figur 8 -: Alternative Anordnung einer Beleuchtungseinrichtung an einer Rolltreppe

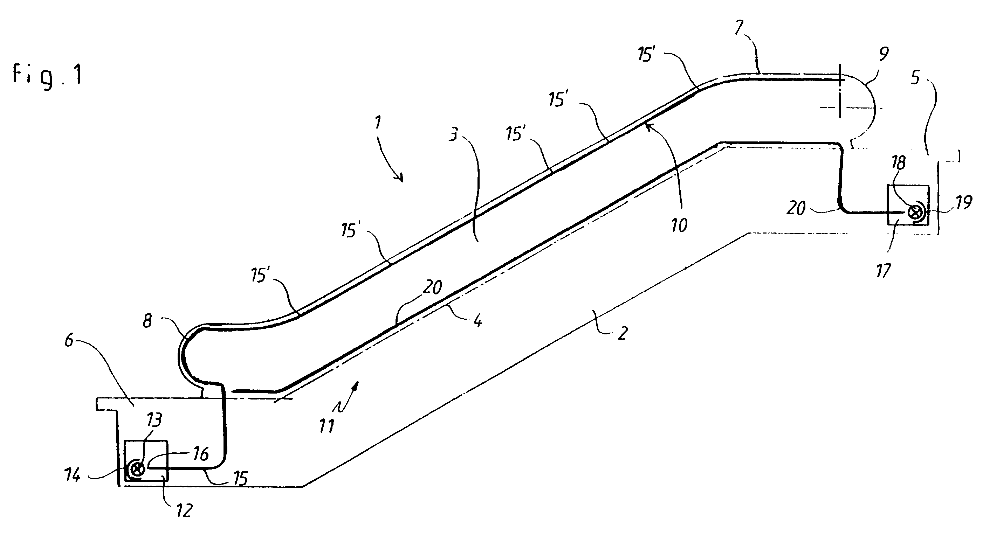

Figur 1 zeigt als Prinzipskizze eine Rolltreppe 1, deren wesentliche Bauteile wie folgt angegeben werden: ein Gerüst 2, eine Balustrade 3, ein lediglich angedeutetes Stufenband 4, einen im Gerüst 2 vorgesehenen oberen sowie unteren Wartungsraum 5,6, der zur Aufnahme nicht weiter dargestellter Antriebskomponenten und dgl. dient, sowie ein auf der Oberseite der Balustrade 3 verlaufender Handlauf 7, der im Bereich der Balustradenköpfe 8,9 umlenkbar ist. Zur Beleuchtung der Balustrade 3 sowie des Stufenbandes 4 sind in diesem Beispiel zwei voneinander unabhängige Beleuchtungseinrichtungen 10,11 vorgesehen. Wie später noch näher erläutert, sind jedoch auch andere Varianten denkbar, die von Fall zu Fall dem jeweiligen Anwendungsfall anzupassen sind. Die Beleuchtungseinrichtung 10 beinhaltet einen Projektor 12, der eine aktive Lichtquelle 13 in Form einer Lampe sowie einen Spiegel 14 als Linse beinhaltet. Ein aus Glasfasermaterial bestehender Lichtleiter 15 kommt zum Einsatz, in welchen das gebündelte Licht der Lampe 13 an sseinem der Lampe 13 zugewandten Ende 16 eingespeist wird. Der Lichtleiter 15 hat eine vorgegebene Dicke (z.B. 20 mm Durchmesser) und wird vom Wartungsraum 6 in geschützter Form in den Bereich des Balustradenkopfes 8 geführt. Da der Lichtleiter 15 über seitlichen Lichtaustritt verfügt (d.h. über seine gesamte Umfangsfläche wird Licht abstrahlt), sollte er in den Bereichen der Personenförderanlage, die nicht notwendigerweise beleuchtet werden müssen oder wo Streulicht zu Irritationen bei den Benutzern der Personenförderanlage 1 führen könnte, in abgedunkelter Form, z.B. innerhalb eines hier nicht dargestellten Schlauches, geführt werden. Einer dieser Bereiche könnte z.B. die Handlaufumlenkung am Balustradenkopf 8 sein. Durch das Bezugszeichen 15' sind Teillängen des Lichtleiters 15 benannt, die z.B. durch Modulbauweise der Rolltreppe 1 vonnöten sein können, jedoch nicht zwingend zur Anwendung kommen müssen.

Analog dazu ist die Beleuchtungseinrichtung 11 anzusehen. Auch sie besteht aus einem Projektor 17 samt Lampe 18 und Linse 19. Licht dieser aktiven Lichtquelle 18 wird in einen weiteren Lichtleiter 20 eingespeist, der in diesem Beispiel aus einem durchgehenden Strang bestehen soll. Je nach Anwendungsfall können hier natürlich auch Teilstücke zum Einsatz gelangen. Dieser Lichtleiter 20 dient zur Beleuchtung des Stufenbandes 4. Die Auslegung der Projektorleistung ist abhängig von der gewünschten Helligkeit sowie der Länge der Personenförderanlage, die insbesondere bei Rollsteigen die Länge einer Rolltreppe doch um ein Mehrfaches übersteigen kann.

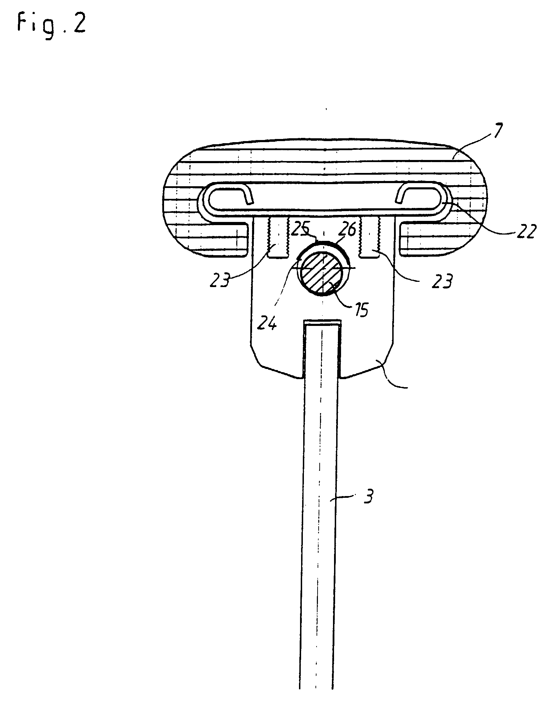

Figur 2 zeigt einen Querschnitt durch die Handlaufführung beispielsweise der in Figur 1 dargestellten Rolltreppe 1. Erkennbar ist die insbesondere aus Glas bestehende Balustrade 3, ein auf diese aufgesetztes Profil 21, vorzugsweise bestehend aus einem durchscheinenden Material, wie Acryl oder dgl., ein auf das Profil 21 aufgesetztes Handlaufführungselement 22 sowie der Handlauf 7 selber. Das Handlaufführungselement 22 ist gegenüber dem Profil 21 lösbar befestigt, beispielsweise über hier nur angedeutete Schrauben 23. Das Profil 21 weist desweiteren einen in seiner Längsrichtung sich erstreckenden Hohlraum 24 auf, der zur Aufnahme des hier ebenfalls nur angedeuteten Lichtleiters 15 dient. Da der Lichtleiter über seine gesamte Umfangsfläche gleichmäßig seitliches Licht abgibt, dies jedoch nicht immer gewünscht wird, kann - sofern eine konzentrierte Lichtabstrahlung lediglich nach unten gewünscht sein sollte - im oberen Bereich 25 des Hohlraumes 24 eine reflektierende Folie 26 vorgesehen werden. In diesem Beispiel ist das Profil 21 mittig auf die Balustrade 3 aufgesteckt und vorzugsweise durch Kleben mit dieser verbunden. Andere Ausgestaltungen, insbesondere asymmetrische Anordnungen, sind in Abhängigkeit des gewünschten Personenförderanlagentypes ebenfalls denkbar. Ferner denkbar ist, daß der Lichtleiter 15 bei nicht notwendiger Folienanwendung den Hohlraum 24 weitestgehend ausfüllt. Nicht weiter dargestellt ist die Einspeisung des Lichtes in den Querschnitt des Lichtleiters 15. Hier kommt der aus mindestens einer Lampe 13,18 sowie mindestens einer Linse 14,19 bestehender Projektor 12,17 gemäß Figur 1 zum Einsatz, der vorzugsweise im Wartungsraum 5,6 der Personenförderanlage 1 positioniert ist.

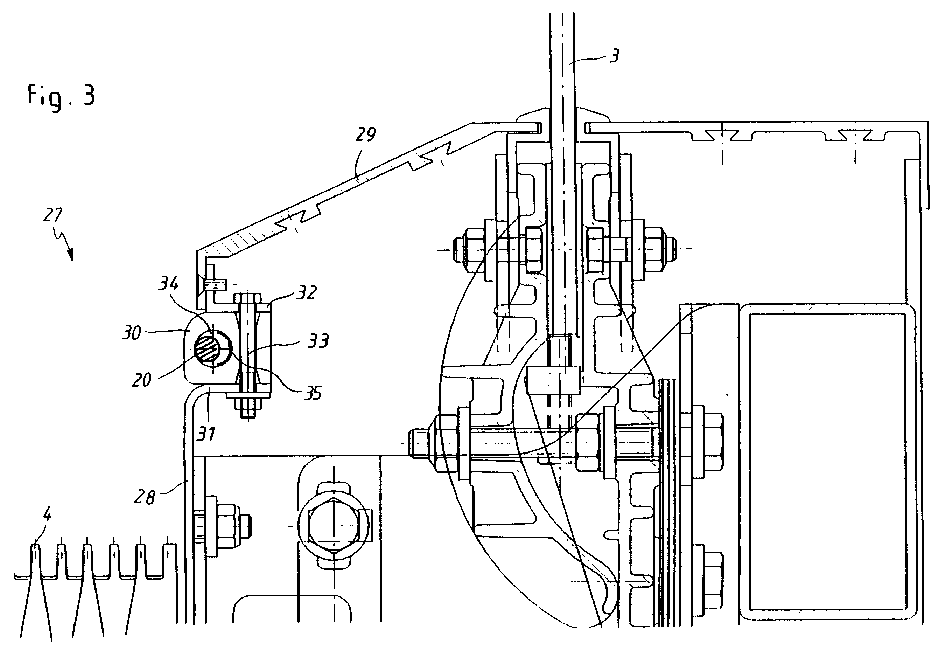

Figur 3 zeigt den Sockelbereich 27 der Rolltreppe 1 gemäß Figur 1. Erkennbar ist das Stufenband 4, die Sockelleiste 28 sowie das Dachelement 29, das sich zwischen der Sockelleiste 28 und der Balustrade 3 erstreckt. Auch hier ist ein durchscheinendes Profil 30, z.B. aus Acryl, vorgesehen, das im Bereich der Sockelleiste 28 angeordnet ist. Die Sockelleiste 28 ist abgewinkelt, wobei auf dem abgewinkelten Bereich 31 das Profil 30 aufgesetzt ist. Über weitere Bauteile 32,33 ist das Profil 30 im Bereich der Sockelleiste 28 fixiert. Im Profil 30 ist ein durchgehender Hohlraum 34 vorgesehen, der zur Aufnahme des ebenfalls nur angedeuteten Lichtleiters 20 dient. Auch hier kann, falls eine Bündelung des abgestrahlten Lichtes ausschließlich in Richtung des Stufenbandes 4 gewünscht wird, ein reflektierendes Bauteil 35 im Bereich des Hohlraumes 34 vorgesehen werden.

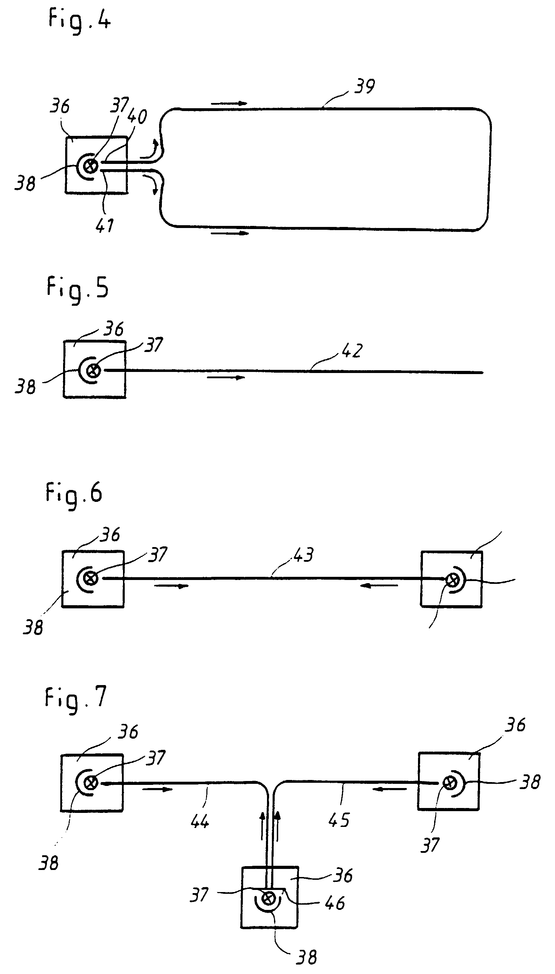

Die Figuren 4 bis 7 zeigen verschiedenartige Einspeisungsmöglichkeiten von aktivem Licht in Lichtleiter. In allen Figuren sind Projektoren 36 vorhanden, die Lampen 37 als aktive Lichtquellen sowie Linsen 38 zur Bündelung des Lichtes zu einem konzentrierten Lichtstrahl beinhalten.

In Figur 4 weist die Lampe 37 eine relative hohe Wattzahl auf, so daß sie in der Lage ist, Licht in einem geschlossenen Lichtleiterkreis 39 einzuspeisen und zwar dergestalt, daß in beide Enden 40,41 gleichermaßen Licht eingespeist wird, das sich dann in Pfeilrichtung ausbreitet. So können durch nur einen Projektor 36 sowohl der Bereich der Balustrade als auch der Bereich des Stufen- bzw. Palettenbandes in gleichem Maße beleuchtet werden.

Figur 5 zeigt einen einzelnen Projektor 36 zur Einspeisung von Licht in einen einzelnen Lichtleiter 42, beispielsweise für die Beleuchtung der Balustrade, des Stufen- oder Palettenbandes oder aber eines Auf- bzw. Abganges des Personenförderers. Im letzteren Fall könnte zur Erhöhung der Sicherheit hier getaktetes Licht in den Lichtleiter 42 eingespeist werden.

In Figur 6 ist ebenfalls nur ein Lichtleiter 43 vorgesehen, in welchen von beiden Seiten mittels der Projektoren 36 Licht eingespeist wird. Eine solche Variante könnte z.B. bei überlangen Rollsteigen zum Einsatz gelangen.

Figur 7 zeigt eine weitere Alternative. Dargestellt sind drei Projektoren 36, die an unterschiedlichen Stellen an Teilstücken 44,45 Licht einspeisen. Diese Variante kann ebenso an überlangen Personenförderern zum Einsatz gelangen. Gleichermaßen besteht die Möglichkeit, an bevorzugten Teilbereichen, z. B. zu Warnzwecken, getaktetes Licht in den jeweiligen Teilbereich 44 und/oder 45 einzuspeisen. Desweiteren besteht die Möglichkeit, beispielsweise im Bereich eines der Projektoren 36 eine optische Effekte hervorrufende rotatorisch antreibbare Scheibe 46 vorzusehen, mittels welcher z.B. sich abwechselnde Farben erzeugt werden können.

Die vorstehenden Beispiele sind je nach Anwendungsfall beliebig kombinierbar und stellen auch keine Begrenzung der Möglichkeiten bezüglich noch andersartiger Einspeisungsarten von Licht in den jeweiligen Lichtleiter dar.

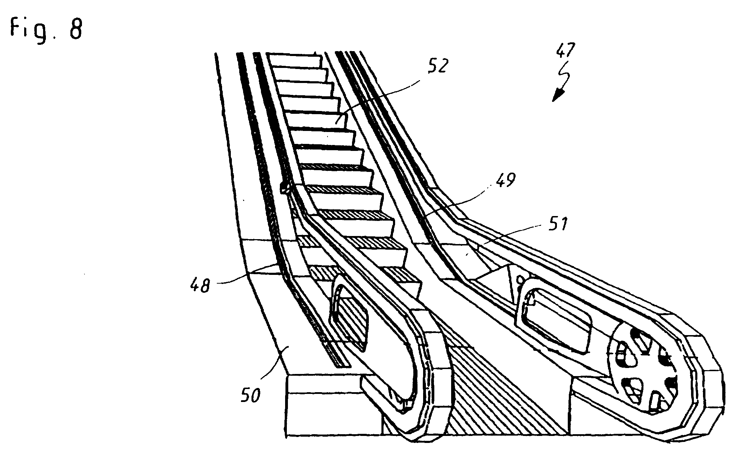

Figur 8 zeigt eine weitere Alternative zur Anordnung der erfindungsgemäßen Beleuchtungseinrichtung im Bereich einer Rolltreppe 47. Die durchgehenden Lichtleiter 48,49 sind in diesem Beispiel im Sockelbereich 50,51 und zwar außerhalb des Stufenbandes 52 vorgesehen, wodurch ein im wesentlichen nach oben gerichteter Lichtaustritt erzielt werden kann. Durch diese Maßnahme können unterschiedlichste Effekte in der bereits vorab beschriebenen Art herbeigeführt werden. Die Lichteinspeisung in die Lichtleiter 48,49 kann analog zu den vorher beschriebenen Ausführungsbeispielen erfolgen. Zur Aufnahme des Lichtleiters 48,49 kann analog zu den Figuren 2 und 3 ebenfalls ein hier nicht weiter dargestelltes Profil zum Einsatz gelangen.

## Patentansprüche

1. Beleuchtungseinrichtung für Personenförderanlagen, wie Rolltreppen und Rollsteige, die insbesondere im Bereich des Handlaufes (7) und/oder des Sockels (27) der Personenförderanlage (1) vorgesehen ist, bestehend aus mindestens einem im wesentlichen in Transportrichtung der Personenförderanlage (1,47) verlaufenden, zumindest im Einbauzustand durchgehenden Lichtleiter (15,20,39,42,43,44,45,48,49) mit seitlichem Lichtaustritt, der im Bereich mindestens eines seiner Enden (16,40,41) von dem gebündelten Lichtstrahl mindestens einer Lichtquelle (13,18,37) beaufschlagbar ist.

2. Beleuchtungseinrichtung nach Anspruch 1, dadurch gekennzeichnet, daß der Lichtleiter (15,20, 39,42-45,48,49) über seine Teillänge bzw. seine Länge gesehen aus einem homogenen durchscheinenden Material besteht.

3. Beleuchtungseinrichtung nach den Ansprüchen 1 und 2, dadurch gekennzeichnet, daß der Lichtleiter (15,20,39,42-45,48,49) aus einem biegsamen Glasfaser- oder Kunststoffmaterial mit glatter Außenumfangsfläche besteht.

4. Beleuchtungseinrichtung nach den Ansprüchen 1 bis 3, dadurch gekennzeichnet, daß der Lichtleiter (10,20,39,42-45,48,49) zumindest partiell innerhalb einer aus durchscheinendem Material bestehenden Schutzhülle geführt ist.

5. Beleuchtungseinrichtung nach den Ansprüchen 1 bis 4, dadurch gekennzeichnet, daß der Lichtleiter (15,20) in einem Hohlraum (24,34) eines aus durchscheinendem Material bestehenden Profils (21,30) geführt ist.

6. Beleuchtungseinrichtung nach den Ansprüchen 1 bis 5, dadurch gekennzeichnet, daß der Lichtleiter (15,20) den Querschnitt des Hohlraumes (24,34) im wesentlichen ausfüllt.

7. Beleuchtungseinrichtung nach den Ansprüchen 1 bis 6, dadurch gekennzeichnet, daß der Lichtleiter (15,20) einen im wesentlichen gerundeten, insbesondere kreisrunden, Querschnitt aufweist.

8. Beleuchtungseinrichtung nach den Ansprüchen 1 bis 7, dadurch gekennzeichnet, daß das Profil (21,30) aus einem Kunststoff, insbesondere aus Acryl, besteht.

9. Beleuchtungseinrichtung nach den Ansprüchen 1 bis 8, dadurch gekennzeichnet, daß das Profil (21) zur Aufnahme des Handlaufes (7) einenends auf die korrespondierende Balustrade (1) aufgesteckt und andernends mit einem Handlaufführungselement (22) verbunden ist.

10. Beleuchtungseinrichtung nach den Ansprüchen 1 bis 8, dadurch gekennzeichnet, daß das Profil (30) im Bereich einer Ausnehmung der Sockelleiste (28) vorgesehen und mit Bauteilen (31,32,33) derselben, insbesondere lösbar, verbunden ist.

11. Beleuchtungseinrichtung nach den Ansprüchen 1 bis 10, dadurch gekennzeichnet, daß der Lichtleiter (15) im Bereich mindestens einer der Handlaufumlenkungen (8) unterhalb des Handlaufes (7) geführt ist.

12. Beleuchtungseinrichtung nach den Ansprüchen 1 bis 11, dadurch gekennzeichnet, daß der Lichtleiter (15) im Bereich der Handlaufumlenkung (8) abgedunkelt geführt ist.

13. Beleuchtungseinrichtung nach den Ansprüchen 1 bis 12, dadurch gekennzeichnet, daß der Lichtleiter (15) im Bereich der Umlenkung (8) innerhalb eines aus nicht durchscheinendem Material bestehenden Elementes, insbesondere eines Schlauches, geführt ist.

14. Beleuchtungseinrichtung nach den Ansprüchen 1 bis 13, dadurch gekennzeichnet, daß zur Konzentration des aus dem Lichtleiter (15,20,39,42-45,48,49) auf seiner gesamten Umfangsfläche seitlich austretenden Lichtes im Bereich der nicht zur Beleuchtung erforderlichen Umfangsfläche der Hohlraum (24,34) und/oder der Lichtleiter (15,20) mit einem aus reflektierendem Bauteil, insbesondere einer Folie (26,35), versehen ist bzw. sind.

15. Beleuchtungseinrichtung nach den Ansprüchen 1 bis 14, dadurch gekennzeichnet, daß die Lichtquelle in an sich bekannter Weise nach Art eines Projektors (12,17,36) ausgebildet ist, wobei die Bündelung des durch mindestens eine elektrische Lampe (13,18,37) erzeugten Lichtes durch mindestens eine Linse (14,19,38) herbeiführbar ist, die den gebündelten Lichtstrahl auf die stirnseitige Querschnittsfläche des Lichtleiters (15,20) projiziert.

16. Beleuchtungseinrichtung nach den Ansprüchen 1 bis 15, dadurch gekennzeichnet, daß der Projektor (12,17,36) außerhalb des sichtbaren Bereiches der Personenförderanlage (1,47), insbesondere im Wartungsraum (5,6) derselben angeordnet ist.

17. Beleuchtungseinrichtung nach den Ansprüchen 1 bis 16, dadurch gekennzeichnet, daß für jede Seite der Personenförderanlage (1,47) mindestens ein Projektor (12,17,36) vorgesehen ist.

18. Beleuchtungseinrichtung nach den Ansprüchen 1 bis 17, dadurch gekennzeichnet, daß jeweils einer der Projektoren (12,17,36) für einen Lichtleiter (15,20,39,42-45) im Bereich des Handlaufes (7) und jeweils ein weiterer Projektor (12,17,36) für einen Lichtleiter (15,20,39,42-45) im Bereich der Sockelleiste (28) vorgesehen ist.

19. Beleuchtungseinrichtung nach Anspruch 18, dadurch gekennzeichnet, daß einer der beiden Projektoren (12,17,36) zur Einspeisung eines kontinuierlichen und der andere Projektor (12,17,36) zur Einspeisung eines diskontinuierlichen Lichtsignals vorgesehen ist.

20. Beleuchtungseinrichtung nach den Ansprüchen 1 bis 19, gekennzeichnet, durch mehrere, in Transportrichtung der Personenförderanlage (1,47) gesehen, an geschützten Bereichen derselben angeordnete Projektoren (12,17,36) zur Einspeisung ggf. unterschiedlicher Lichtsignale in korrespondierende Endbereiche der bzw. des Lichtleiter(s).

21. Beleuchtungseinrichtung nach den Ansprüchen 1 bis 20, dadurch gekennzeichnet, daß zwischen der Lampe (13,18,37) und der Linse (14,19,38) optische Effekte hervorrufende Elemente (46) vorgesehen sind.

22. Beleuchtungseinrichtung nach Anspruch 21, dadurch gekennzeichnet, daß die Elemente (46) scheibenförmig ausgebildet und relativ zur Linse (38) in Umfangsrichtung, insbesondere motorisch angetrieben, drehbar sind.

23. Beleuchtungseinrichtung nach einem oder mehreren der Ansprüche 1 bis 22, dadurch gekennzeichnet, daß der Lichtleiter (48,49) im Sockelbereich (50,51) der Personenförderanlage (47) außerhalb des Stufenbandes (52) vorgesehen ist.

24. Beleuchtungseinrichtung nach Anspruch 23, dadurch gekennzeichnet, daß der Lichtleiter (48,49) mit im wesentlichen nach oben gerichtetem Lichtaustritt im Sockelbereich (50,51) vorgesehen ist.

## Claims

1. Lighting device for people carrier systems such as escalators and moving pavements, which is provided in particular in the region of the moving hand rail (7) and/or base (27) of the people carrier system (1), comprising at least one light guide (15, 20, 39, 42, 43, 44, 45, 48, 49), which runs essentially in the transport direction of the people carrier system (1, 47) and is continuous at least in the installed state, having lateral light emission, and which in the region at least of one of its ends (16, 40, 41) may be subjected to the bundled light beam of at least one light source (13, 18, 37).

2. Lighting device according to Claim 1, characterised in that the light guide (15, 20, 39, 42-45, 48, 49) is made of a homogeneous transparent material viewed over part of its length or over its length.

3. Lighting device according to Claims 1 and 2, characterised in that the light guide (15, 20, 39, 42-45, 48, 49) is made of a flexible glass fibre or plastic material with a smooth outer peripheral surface.

4. Lighting device according to Claims 1 to 3, characterised in that the light guide (15, 20, 39, 42-45, 48, 49) is directed at least partially inside a protective sheath made of transparent material.

5. Lighting device according to Claims 1 to 4, characterised in that the light guide (15, 20) is disposed in a cavity (24, 34) of a profile section (21, 30) made of transparent material.

6. Lighting device according to Claims 1 to 5, characterised in that the light guide (15, 20) substantially fills the cross-section of the cavity (24, 34).

7. Lighting device according to Claims 1 to 6, characterised in that the light guide (15, 20) has an essentially rounded, in particular circular, cross-section.

8. Lighting device according to Claims 1 to 7, characterised in that the profile section (21, 30) is made of a plastic, in particular acrylic.

9. Lighting device according to Claims 1 to 8, characterised in that the profile section (21) is placed on the corresponding balustrade (1) at one end to receive the moving hand rail (7) and is connected at the other end to the moving hand rail guide element (22).

10. Lighting device according to Claims 1 to 8, characterised in that the profile section (30) is provided in the region of a recess in the skirting strip (28) and is connected to components (31, 32, 33) of same, in particular so as to be detachable.

11. Lighting device according to Claims 1 to 10, characterised in that the light guide (15) is disposed in the region of at least one of the moving hand rail deflections (8) below the moving hand rail (7).

12. Lighting device according to Claims 1 to 11, characterised in that the light guide (15) is disposed in darkened state in the region of the moving hand rail deflection (8).

13. Lighting device according to Claims 1 to 12, characterised in that the light guide (15) is disposed in the region of the deflection (8) inside an element made of non-transparent material, in particular a tube.

14. Lighting device according to Claims 1 to 13, characterised in that for concentration of the light emitting laterally from the light guide (15, 20, 39, 42-45, 48, 49) on the whole of its peripheral surface in the region of the peripheral surface not necessary for illumination, the cavity (24, 34) and/or the light guide (15, 20) is/are provided with a reflective component, in particular a foil (26, 35).

15. Lighting device according to Claims 1 to 14, characterised in that the light source is constructed as a projector (12, 17, 36) in a known manner, whereby the bundling of the light generated by at least one electric lamp (13, 18, 37) may be passed through at least one lens (14, 19, 38), which projects the bundled light beam onto the cross-sectional front face of the light guide (15, 20).

16. Lighting device according to Claims 1 to 15, characterised in that the projector (12, 17, 36) is arranged outside the visible area of the people carrier system (1, 47), in particular in the maintenance area (5, 6) of same.

17. Lighting device according to Claims 1 to 16, characterised in that at least one projector (12, 17, 36) is provided for each side of the people carrier system (1, 47).

18. Lighting device according to Claims 1 to 17, characterised in that one of the projectors (12, 17, 36) is respectively provided for a light guide (15, 20, 39, 42-45) in the region of the moving hand rail (7) and a further projector (12, 17, 36) is respectively provided for a light guide (15, 20, 39, 42-45) in the region of the skirting strip (28).

19. Lighting device according to Claim 18, characterised in that one of the two projectors (12, 17, 36) is provided to feed in a continuous light signal and the other projector (12, 17, 36) is provided to feed in a discontinuous light signal.

20. Lighting device according to Claims 1 to 19, characterised by several projectors (12, 17, 36) arranged in protected areas of the people carrier system (1, 47), viewed in the transport direction of same, possibly to feed various light signals into corresponding end regions of the light guide or guides.

21. Lighting device according to Claims 1 to 20, characterised in that elements (46) producing optical effects are provided between the lamp (13, 18, 37) and the lens (14, 19, 38).

22. Lighting device according to Claim 21, characterised in that the elements (46) are constructed in the shape of a disc and are rotatable, in particular driven by motor, in peripheral direction relative to the lens (38).

23. Lighting device according to one or more of Claims 1 to 22, characterised in that the light guide (48, 49) is provided in the base region (50, 51) of the people carrier system (47) outside the step belt (52).

24. Lighting device according to Claim 23, characterised in that the light guide (48, 49) is provided with essentially upwardly directed light emission in the base region (50, 51).

## Revendications

1. Dispositif d'éclairage pour des installations de transport de personnes, telles que des escaliers roulants et des trottoirs roulants, qui est prévu notamment au niveau de la main courante (7) et/ou de la plinthe (37) de l'installation (1) de transport de personnes et est constitué par au moins un guide de lumière (15,20,39,42,43,45,48, 49) qui s'étend essentiellement dans la direction de transport de l'installation de transport de personnes (1, 47) et est continu à l'état monté et comporte une sortie latérale de lumière, qui peut être chargée, au moins dans la zone de l'une de ses extrémités (16,40,41), par le faisceau de lumière focalisé d'au moins une source de lumière (13,18, 37).

2. Dispositif d'éclairage selon la revendication 1, caractérisé en ce que le guide de lumière (15,20,39,42-45,48,49) est constitué, sur une partie de sa longueur ou sur toute sa longueur, par un matériau présentant une transparence homogène.

3. Dispositif d'éclairage selon les revendications 1 et 2, caractérisé en ce que le guide de lumière (15,20,39,42-45,48,49) est constitué par une fibre de verre ou une matière plastique flexible possédant une surface circonférentielle extérieure lisse.

4. Dispositif d'éclairage selon les revendications 1 à 3, caractérisé en ce que le guide de lumière (10,20,39,42-45,48,49) est guidé au moins en partie à l'intérieur d'une douille de protection formée d'un matériau transparent.

5. Dispositif d'éclairage selon les revendications 1 à 4, caractérisé en ce que le guide de lumière (15,20) est guidé dans une cavité (24,34) d'un profilé (21,30) formé d'un matériau transparent.

6. Dispositif d'éclairage selon les revendications 1 à 5, caractérisé en ce que le guide de lumière (15,20) remplit pour l'essentiel la section transversale de la cavité (24,34).

7. Dispositif d'éclairage selon les revendications 1 à 6, caractérisé en ce que le guide de lumière (15,20) possède une section transversale essentiellement ronde, notamment circulaire.

8. Dispositif d'éclairage selon les revendications 1 à 7, caractérisé en ce que le profilé (21,30) est formé d'une matière plastique, notamment d'une matière acrylique.

9. Dispositif d'éclairage selon les revendications 1 à 8, caractérisé en ce que le profilé (21) servant à recevoir la main courante (7) est emmanché à une extrémité sur la balustrade correspondante (1) et est relié, à l'autre extrémité, à un élément de guidage (22) de la main courante.

10. Dispositif d'éclairage selon les revendications 1 à 8, caractérisé en ce que le profilé (30) est prévu dans la zone d'un évidement de la barrette (28) de la plinthe et est relié, notamment de façon amovible, à des composants (31,32,33) de cette barrette.

11. Dispositif d'éclairage selon les revendications 1 à 10, caractérisé en ce que le guide de lumière (15) est guidé, dans la zone d'au moins l'un des renvois (8) de la main courante (7), au-dessous de cette dernière.

12. Dispositif d'éclairage selon les revendications 1 à 11, caractérisé en ce que le guide de lumière (15) est guidé, en étant masqué, dans la zone du renvoi (8) de la main courante.

13. Dispositif d'éclairage selon les revendications 1 à 12, caractérisé en ce que le guide de lumière (15) est guidé, dans la zone du renvoi (8), à l'intérieur d'un élément constitué d'un matériau non transparent, notamment d'un tuyau.

14. Dispositif d'éclairage selon les revendications 1 à 13, caractérisé en ce que pour la concentration de la lumière qui sort latéralement du guide de lumière (15,20,39,42-45,48,49) sur l'ensemble de sa surface circonférentielle, la cavité (24,34) et/ou le guide de lumière (15,20) est/sont équipés d'un composant réfléchissant, notamment d'une feuille (26,35), dans la zone de la surface circonférentielle non nécessaire pour l'éclairage.

15. Dispositif d'éclairage selon les revendications 1 à 14, caractérisé en ce que la source de lumière est constituée de façon connue en soi à la manière d'un projecteur (12,17,36), la focalisation de la lumière produite par au moins une lampe électrique (13,18,37) pouvant être guidée par au moins une lentille (14,19,38) qui projette le faisceau de lumière focalisé sur la surface frontale en coupe transversale du guide de lumière (15,20).

16. Dispositif d'éclairage selon les revendications 1 à 15, caractérisé en ce que le projecteur (12,17,36) est disposé à l'extérieur de la zone visible de l'installation de transport de personnes (1,47), notamment dans l'espace de maintenance (5,6).

17. Dispositif d'éclairage selon les revendications 1 à 16, caractérisé en ce qu'au moins un projecteur (12,17,36) est prévu pour chaque côté de l'installation de transport de personnes (1,47).

18. Dispositif d'éclairage selon les revendications 1 à 17, caractérisé en ce que respectivement l'un des projecteurs (12,17,36) pour un guide de lumière (15,20,39,42-45) est prévu dans la zone de la main courante (7) et que respectivement un autre projecteur (12,17,36) pour un guide de lumière (15,20,39,42-45) est prévu dans la zone de la barrette (28) de la plinthe.

19. Dispositif d'éclairage selon la revendication 18, caractérisé en ce que l'un des deux projecteurs (12,17,36) sert à délivrer un signal de lumière continue et l'autre projecteur (12,17,36) sert à délivrer un signal de lumière discontinu.

20. Dispositif d'éclairage selon les revendications 1 à 19, caractérisé par plusieurs projecteurs (12,17,36) qui sont disposés, lorsqu'on regarde dans la direction de transport de l'installation de transport de personnes (1,47), dans des zones protégées de cette installation, pour l'introduction de signaux de lumière éventuellement différents dans des parties d'extrémité correspondantes du ou des guides de lumière.

21. Dispositif d'éclairage selon les revendications 1 à 20, caractérisé en ce qu'entre la lame (13,18,37) et la lentille (14,19,38) sont prévus des éléments (46) produisant des effets optiques.

22. Dispositif d'éclairage selon la revendication 21, caractérisé en ce que les éléments (46) sont réalisés en forme de disques et peuvent tourner par rapport à la lentille (38) dans la direction circonférentielle, notamment en étant entraînés par un moteur.

23. Dispositif d'éclairage selon les revendications 1 à 22, caractérisé en ce que le guide de lumière (48,49) est prévu dans la zone de la plinthe (50,51) de l'installation de transport de personnes (47), à l'extérieur de la bande (52) des marches.

24. Dispositif d'éclairage selon la revendication 23, caractérisé en ce que le guide de lumière (48,49) comporte une sortie de lumière, dirigée essentiellement vers le haut, dans la zone (50,51) de la plinthe.
